# EUROPEAN PATENT APPLICATION

(11) **EP 2 026 527 A1**
(43) Date of publication of application: **18.02.2009**
(21) Application number: 08160556.0
(22) Date of filing: 16.07.2008
(51) Int. Cl.: H04L 29/06, G06F 21/00

(54) **Method and device for predicting a network attack action**

(30) Priority: 16.07.2007 CN 200710130232; 06.06.2008 WO PCT/CN2008/071218
(71) Applicant: Huawei Technologies Co., Ltd., Longgang District Shenzhen 518129 (CN); University Of Electronic Science And Technology Of China, Sichuan 610054 (CN)
(72) Inventor: He, Xianggao, University of Science and technologie China, 610054, Chengdu Sichuan (CN); Fu, Chong, University of electronic Science and Technology China, 610054, Chengdu Sichuan (CN); Zhang, Fengli, University of Electronic Science and Technologie China, 610054, Chengdu Sichuan (CN); Cao, Zhenqi, Huawei Technologies Co, Ltd, 518129, Shenzhen Guangdong (CN); Wang, Dunquan, Huawei Technologies Co, Ltd, 518129, Shenzhen Guangdong (CN); Zheng, Niejun, Huawei Technologies Co, Ltd., 518129, Shenzhen Guangdong (CN); Zhang, Chengwei, Huawei Technologies Co, Ltd., 518129, Shenzhen (CN); Wang, Bo, Huawei technologies Co, Ltd., 518129, Shenzhen Guangdong (CN); Lu, Changyi, Huawei Technologies Co, Ltd., 518129, Shenzhen Guangdong (CN)
(74) Representative: Hengelhaupt, Jürgen

(57) **Abstract**

A method for predicting a network attack action, including: monitoring a network status parameter and obtaining information of an attack action according to a change of the network status parameter; selecting a subsequent attack action which has a most possibility to happen from subsequent attack actions of the attack action according to a correspondence between the attack action and the subsequent attack actions, the subsequent attack action which has the most possibility to happen being a subsequent attack action with a largest occurrence number in the subsequent attack actions corresponding to the attack action; and outputting the subsequent attack action which has the most possibility to happen as a predicted network attack action. A device for predicting a network attack action including an attack action management unit is also provided. The present invention describes the attack action procedure and the relation among attack actions during the attack action procedure and provides a network pre-warning method for determining which action is to be taken.

## Description

This application claims benefits of Chinese Application No. 200710130232.9 filed on July 16, 2007, titled "METHOD AND DEVICE FOR PREDICTING NETWORK ATTACK ACTION" and PCT application PCT/CN2008/071218 filed on June 6, 2008, titled "METHOD AND DEVICE FOR PREDICTING NETWORK ATTACK ACTION", which are incorporated herein by reference in their entirety.

### Field of the Invention

The present invention relates to the filed of network communication security, and in particular, to a method and device for predicting a network attack action.

### Background of the Invention

With the rapid development of computer network technology, the degree of the society informationalization increases continuously. Bringing great economic and social benefits, the network also faces an increasingly serious security problem that various network attacks emerge endlessly. The number and type of the attacks become more and more and the attacks become more and more complex. Therefore, the threat to users of the network becomes greater. Thus, a detailed study on the characteristic of the network attack action is needed.

The study on the network attack can not merely be based on an attack individual and needs to be based on the whole network attack system. However, due to the complexity and diversity of the attack action, it is difficult to classify and summarize attack actions. Especially, for a large-scale network, it is more difficult to classify and summarize attack actions. Moreover, conventional attack models mainly involve the intrusion detection while no description and analysis of the network attack action is provided in view of early-warning.

Currently, most descriptions of the network attack focus on the classification and summarization for vulnerabilities and attack methods. For example, in a description method using an attack tree model, a tree is used to indicate the relation of attack actions and each node in the tree indicates each target of the attack. The attack tree is visual and easily perceived. However, the attack tree does not differentiate an attack action and an attack result. Thus, it is difficult to use the attack tree model to implement an early-warning for the attack. In another description method based on Petri net which is a mathematical description of the discrete, parallel system, *Place* in Petri net is used to indicate a stage of the attack, *Transition* in Petri net is used to indicate the attack action and *Connection* in Petri net is used to indicate the attack procedure. Another method for describing an attack procedure uses a status transition diagram. The attack procedure is represented as a system status transition and it can be determined whether the system is attacked by determining whether each state of the attack procedure is satisfied. Thus, which status the system will reach can be predicted according to a detected attack action. However, the relation among different attack procedures is not considered.

According to a conventional intrusion detection technology, an attack action is detected by matching the attack action with a characteristic of a known attack action. For example, an intrusion rule set of Snort is adapted to detect an attack with a single packet characteristic. With State Transition Analysis Technique Language (STATL) language, an attack action is described based on a state and state transition, thus, an intrusion characteristic library is provided for an intrusion detection system based on a state diagram. As for Event, Status, Time relation, Quantitative (ESTQ) method, a network protocol attack is described with <event, protocol status, time relation, quantitative relation >. As for Intrusion Detection In Our Time (IDIOT), an intrusion is modeled and detected with a colored Petri net.

The prior art also provides another method for describing a network intrusion action and a normal action theoretically based on Action,State,Sequence,Quantity (ASSQ) quadruple tuple. In the method, new definitions and modifications are carried out based on the existing Petri net model for being applied in various intrusion detection systems and related systems for tracing and detecting intrusion actions and distinguishing the normal action with the intrusion action. This technology is a description method combining ESTQ method with Petri net. ASSQ quadruple tuple is an improvement of ESTQ method and is a general description of the intrusion actions. ASSQ quadruple tuple is adapted to analyze the time relation and quantitative relation shown in system status and network events during an attack and implement a description of the quadruple tuple with a newly defined Petri net model.

During implementing the present invention, the inventor finds that in the prior art, the description of the attack action during an attack procedure is simple, the attack procedure can not be described clearly, the integrity of a large-scale network attack is not indicated and thus, the prior art can not be applied in a macro network. In addition, the prior art only defines the intrusion action with the quadruple tuple and describes the intrusion procedure with the Petri net, and does not provide how to predict and describe subsequent intrusion actions.

### Summary of the Invention

Embodiments of the invention provide a method and device for predicting a network attack action so as to predict and block subsequent attack actions.

One embodiment provides a method for predicting a network attack action, including:

monitoring a network status parameter and obtaining information of an attack action according to a change of the network status parameter;

selecting a subsequent attack action which has a most possibility to happen from subsequent attack actions of the attack action according to a correspondence between the attack action and the subsequent attack actions, the subsequent attack action which has the most possibility to happen being a subsequent attack action with a largest occurrence number in subsequent attack actions corresponding to the attack action; and

outputting the subsequent attack action which has the most possibility to happen as a predicted network attack action.

Another embodiment of the present invention provides a device for predicting a network attack action, including:

an attack action management unit adapted to detect a change of a network status parameter, search attack action information according to the change of the network status parameter, and predict a subsequent attack action which has a most possibility to happen from subsequent attack actions corresponding to an attack action, according to a correspondence between the attack action and subsequent attack actions of the attack action.

In embodiments of the present invention, the attack action procedure and the relation among attack actions during the attack action procedure are described; the subsequent attack action which has the most possibility to happen is found from all subsequent attack actions of the happened attack action, according to the correspondence between the attack action and the subsequent attack actions of the attack action; and the corresponding response subunit blocks the subsequent attack action which has the most possibility to happen. Thus, the subsequent attack actions can be predicted and blocked, a pre-warning method is provided and the pre-warning is achieved and the security of the network is improved.

### Brief Description of the Drawings

Figure 1 shows a weighted directed graph for describing a network attack action according to one embodiment of the present invention;

Figure 2 shows an index table and a subsequent attack action table for describing a network attack action according to one embodiment of the present invention;

Figure 3 shows a flow chart for predicting a network attack action according to one embodiment of the present invention;

Figure 4 shows a flow chart for obtaining an attack support tree describing a network attack action according to one embodiment of the present invention;

Figure 5 shows another flow chart for obtaining an attack support tree describing a network attack action according to one embodiment of the present invention; and

Figure 6 shows a structure of a device for predicting a network attack action according to one embodiment of the present invention.

### Detailed Description of the Embodiments

By reference to the Figures and embodiments, detailed descriptions of the present invention are further provided as follows.

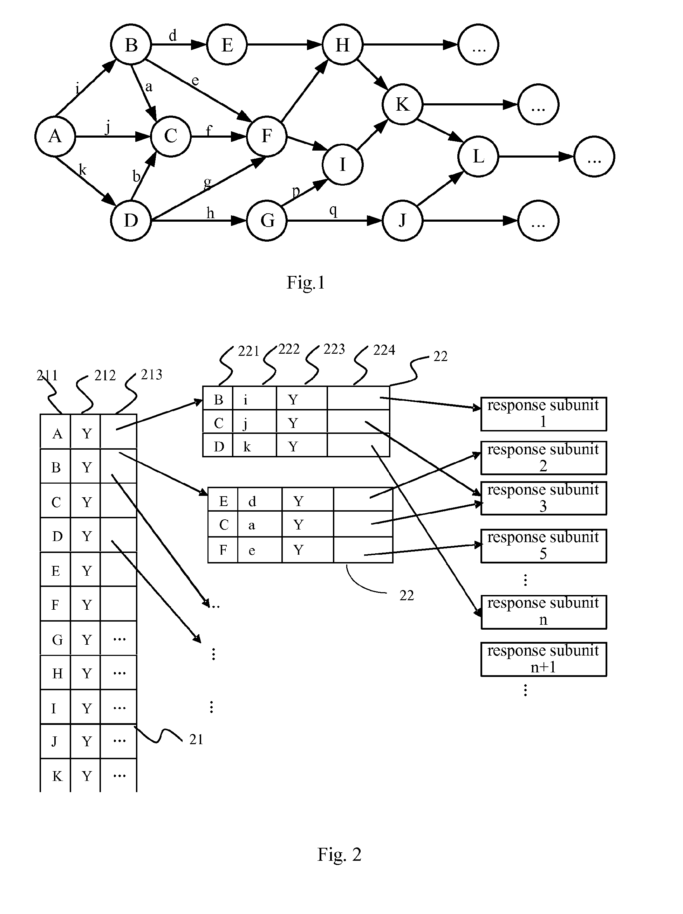

The relation between an attack action and a subsequent attack action of the attack action may be illustrated with a weighted directed graph. Figure 1 shows a weighted directed graph for describing a network attack action according to one embodiment of the present invention. The circle in Figure 1 is a vertex in the weighted directed graph of attack actions, each vertex denotes an attack action and the letter in the circle denotes the name of the attack action. The arrow line in Figure 1 is a connection in the weighted directed graph of attack actions and the connection denotes a pointing relation from an attack action to a corresponding subsequent attack action. The tail of the connection is in connection with a previous attack action and the head of the connection is directed to a subsequent attack action. For example, *A* is a previous attack action *and B*, *C* and *D* are subsequent attack actions of A. The letter on the arrow line denotes the weight of the connection in the weighted directed graph so as to indicate how many times an attack sequence from a previous attack action to a subsequent attack action happened. For example, the weight of the connection *AB* is *i*, thus, it is indicated that the attack sequence from attack action A to attack action B has happened for *i* times. The weight of the connection AC is *j*, and if *i>j*, it is indicated that the occurrence number of an attack sequence from attack action *A* to attack action *B* is larger than the that of an attack sequence from attack action *A* to attack action *C*. On the other hand, if *i<j*, it is indicated that the occurrence number of the attack sequence from attack action *A* to attack action *C* is larger than the occurrence number of the attack sequence from attack action *A* to attack action *B*.

Figure 2 shows an index table and a subsequent attack action table for describing the network attack action according to one embodiment of the present invention. The relation among the name of the attack action, the state of the attack action and the subsequent attack action of the attack action is indicated in the index table. The relation among the name of the subsequent attack action, the state of the subsequent attack action, the occurrence number of the attack action sequence from an attack action to a corresponding subsequent attack action, and a policy for blocking a subsequent attack action which has the most possibility to happen is indicated in the subsequent attack action table. According to Figure 1, an index table 21 and a plurality of subsequent attack action tables 22 are established. Each item in index table 21 includes *name* 211, *active* 212 and **next_table* 213. The *name* 211 is a name of an attack action, *name*∈*n*, and *n* is a set of attack action names. The *active 212* denotes a state of an attack action, *Y* denotes that the attack action has not been masked and *N* denotes that the attack action has been masked, and the initial value of each *active* is Y. During searching an attack action, a masked attack action can not be traversed and found and is not shown in the weighted directed graph of attack actions, so that the subsequent attack action which has the most possibility to happen may be found easily and quickly. The **next_table 213* is a pointer pointing to a subsequent attack action table corresponding to the attack action. Subsequent attack action tables 22 are adapted to store information related to subsequent attack actions, and each item in the subsequent attack action table is adapted to describe each connection in the weighted directed graph of attack actions. Each item includes *next_name* 221, *num* 222, *active* 223 and **respond* 224. The *next_name* 221 is the name of subsequent attack action, *next_name* ∈ *n.* The *num* 222 is the occurrence number of the attack action sequence from an attack action to a subsequent attack action of the attack action. The *active* 223 denotes a state of a subsequent attack action, particularly, denotes a state of a connection between an attack action and a subsequent attack action of the attack action; and Y denotes that a connection has not been masked and N denotes that a connection has been masked, and the initial value of each *active* is *Y.* A masked connection is configured as in a hidden status and is not shown in the weighted directed graph of attack actions. The * *respond 224* denotes a pointer pointing to a response sub-unit which blocks a subsequent attack action.

In this embodiment, the index table 21 and the subsequent attack action tables 22 are established as follows.

According to information regarding attack actions previously happened, a precedence and successive relation, for example the precedence and successive relation of each vertex in Figure 1, is obtained. The weight date of a connection is determined according to history sample data. Then, the index table 21 is established. The names of attack actions are filled into fields *name 211* in table items and fields *active 212* are configured to be Y. For each attack action, a subsequent attack action table 22 is established. The names of all subsequent attack actions of the attack action are filled into fields *next_name 221* in the subsequent attack action table 22 and each subsequent attack action corresponds to a table item. The pointer **next_table 213* in the table item corresponding to each attack action points to a corresponding subsequent attack action table 22. According to history sample data, the connection weight *num 222* is provided in each subsequent attack action table 22. Fields *active 223* are all configured to Y. The pointer **respond 224* in each item of the subsequent attack action table 22 points to a respond subunit for blocking the subsequent attack action. Thus, the index table 21 and the subsequent attack action table 22 are obtained.

As can be seen, according to one embodiment of the present invention, key relations among attack actions during an attack procedure are described, and an attack is no longer described individually.

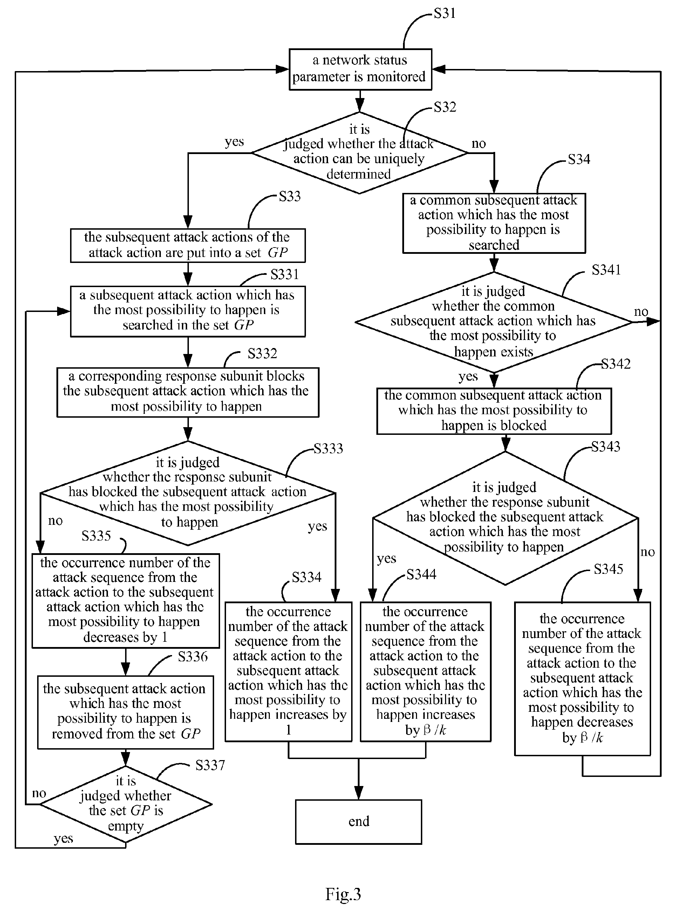

Figure 3 shows a flow chart for predicting a network attack action according to one embodiment of the present invention. Referring to Figure 3, the process for predicting a network attack action according to one embodiment of the present invention includes the following blocks.

At block S31, a network status parameter is monitored. If the network status parameter changes, it is indicated that an attack action happens and attack action information is obtained according to the change of the network status parameter.

At block S32, it is judged whether the attack action can be uniquely determined. If the attack action is an attack action which can be uniquely determined, the flow turns to block S33, otherwise turns to block S34.

At block S33, according to the correspondence between the attack action and subsequent attack actions of the attack action, the subsequent attack actions of the attack action are put into a set *GP*.

At block S331, a subsequent attack action which has the most possibility to happen is searched in the set *GP*. The weights of the connections pointing to the subsequent attack actions are traversed. The higher the weight of the connection is, the larger the occurrence number of the subsequent attack actions is. The subsequent attack action pointed by the connection with the largest weight value is the subsequent attack action which has the most possibility to happen.

At block S332, a corresponding response subunit blocks the subsequent attack action which has the most possibility to happen.

At block S333, it is judged whether the response subunit has blocked the subsequent attack action which has the most possibility to happen. If the response subunit has blocked the subsequent attack action which has the most possibility to happen, the flow turns to block S334, otherwise, turns to block S335.

At block S334, the response subunit has blocked the subsequent attack action which has the most possibility to happen and recoveries the network status to a safe status. Then, the weight of the connection pointing to the subsequent attack action which has the most possibility to happen increases by 1. Thus, the pre-warning for the network attack action is success and the flow completes.

At block S335, the response subunit fails to block the subsequent attack action which has the most possibility to happen and the network status does not recovery to the safe status. Thus, the weight of the connection pointing to the subsequent attack action which has the most possibility to happen decreases by 1.

At block S336, the subsequent attack action which has the most possibility to happen is removed from the set *GP*.

At block S337, it is judged whether the set *GP* is empty, if the set *GP* is empty, the flow turns to block S31, otherwise the flow turns to block S331.

At block S34, the attack action is one of possible attack actions. Thus, according to the correspondence between the attack action and subsequent attack actions of the attack action, a common subsequent attack action which has the most possibility to happen is searched from subsequent attack actions of the possible attack actions.

At block S341, it is judged whether the common subsequent attack action which has the most possibility to happen exists in the subsequent attack actions of the possible attack actions. If the common subsequent attack action which has the most possibility to happen exists, the flow turns to block S342, otherwise, turns to block S31.

At block S342, the common subsequent attack action which has the most possibility to happen is blocked by a corresponding response subunit.

At block S343, it is judged whether the response subunit has blocked the subsequent attack action which has the most possibility to happen. If the response subunit has blocked the subsequent attack action which has the most possibility to happen, the flow turns to block S344, otherwise, turns to block S345.

At block S344, the response subunit has blocked the subsequent attack action which has the most possibility to happen and recoveries the network status to the safe status. Then, the weight of the connection pointing to the subsequent attack action which has the most possibility to happen increases by β/*k*, in which β ranges from 0 to 1 and *k* represents the number of the possible attack actions. Thus, it is indicated that the pre-warning for the network attack action is success and the flow completes.

At block S345, the response subunit fails to block the subsequent attack action which has the most possibility to happen and the network status does not recovery to the safe status. Thus, the weight of the connection pointing to the subsequent attack action which has the most possibility to happen decreases by β/*k*, in which β ranges from 0 to 1 and *k* represents the number of the possible attack actions.

The method for predicting a network attack action is described in detail with reference to a specific embodiment. Referring Figures 1 and 2, *A, B, C*, *D* are attack actions and *B, C*, *D* are subsequent attack actions of *A*. The weight of connection *AB* is *i,* the weigh of connection *AC* is *j* and the weight of connection *AD* is *k*. As shown in Figure 2, response subunits 1, 3 and n block attack actions *B, C* and *D* respectively.

If the network status parameter changes and it is determined that current attack action is *A*, the subsequent attack actions *B, C* and *D* of the attack action *A* constitute a set *GP* and the subsequent attack action which has the most possibility to happen is searched in the set GP. If *i*> *j>k, then B* is the subsequent attack action which has the most possibility to happen and the response subunit U1 corresponding to *B* is called. If the response subunit U1 blocks *B* and the network status is recovered to the safe status, the prediction successes and the weight *i* of connection *AB* increase by 1 and thus the flow completes. If the response subunit 1 does not block B and the network status is not recovered to the safe status, the prediction fails, the weight *i* of connection *AB* decreases by 1, and B is removed from *GP.* Then, it is continued to search the subsequent attack action which has the most possibility to happen in *GP* till the response subunit has blocked the subsequent attack action which has the most possibility to happen or *GP* becomes empty.

If the network status parameter changes and it is determined that the attack action may be *B* or *D*, the subsequent attack action which has the most possibility to happen of *B* or *D* is searched respectively. In Figure 1, attack actions *E*, *F* and *C* are subsequent attack actions of *B* and the weights of connections *BE, BF* and *BC* are *d, e* and *a* respectively; and attack actions *C*, *F* and *G* are subsequent attack actions of D and the weights of connections *DC, DF* and *DG* are *b*, *g* and *h* respectively. If *d>e, d>a, h>b* and *h>g*, then the subsequent attack action which has the most possibility to happen of *B* is *E* and the subsequent attack action which has the most possibility to happen of *D* is *G*. In other words, no common subsequent attack action which has the most possibility to happen exists for *B* and *D* and the network status is monitored continuously. If *e>d, e>a, g>b* and *g>h,* the subsequent attack actions which have the most possibility to happen of *B* and *D* are both *F*, the response subunit 5 corresponding to *F* is called. If the response subunit 5 blocks *F*, the network status recoveries to the safe status and the prediction is success, and the weights *e, g* of connections *BF, DF* increase by β /*2* and the flow completes. If the response subunit 5 does not block F, the network status does not recovery to the safe status and the prediction fails, and the weights *e, g* of connections *BF, DF* decrease by β /*2* and the network status parameters are monitored continuously.

According to the above embodiments, the subsequent attack action which has the most possibility to happen is searched by analyzing the subsequent attack actions and the corresponding response subunit blocks the subsequent attack action which has the most possibility to happen. Therefore, the pre-warning is achieved.

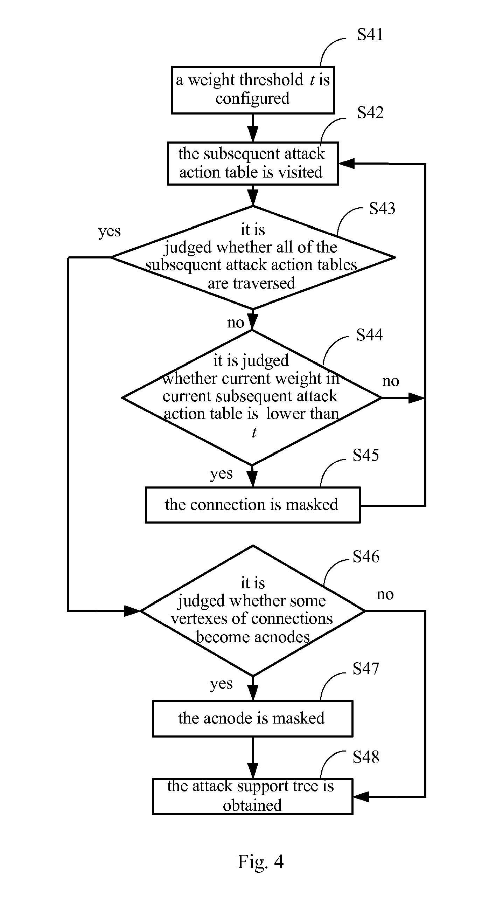

Figure 4 shows a flow chart for obtaining an attack support tree of a network attack action according to one embodiment of the present invention. The attack support tree is obtained by simplifying the weighted directed graph and the flow includes the following blocks.

At block S41, a weight threshold *t* is configured according to historical data empirically.

At block S42, the subsequent attack action table is visited and the table item *num*222 is traversed.

At block S43, it is judged whether all of the subsequent attack action tables are traversed. If all of the subsequent attack action tables are traversed, the flow turns to block S46; otherwise, turns to block S44.

At block S44, the value of *num 222* in current subsequent attack action table is compared with *t*. If the value of *num 222* in current subsequent attack action table is less than *t*, the flow turns to block S45; otherwise, turns to block S42.

At block S45, the value of *num 222* in the subsequent attack action table is less than *t*, thus, it is indicated that the subsequent attack action has a low possibility to happen and it may be considered as secure. Therefore, the connection corresponding to the value of num 222 in current subsequent attack action table is masked and the subsequent attack action pointed by the connection does not need to be searched and traversed. The masked connection is hidden in the weighted directed graph of attack actions and is not shown.

At block S46, when all of the subsequent attack action tables are traversed, it is judged whether some vertexes of connections become acnodes because some connections are masked in the weighted directed graph. If the acnode exists in the weighted directed graph, the flow turns to block S47; otherwise, the flow turns to block S48.

At block S47, the acnode is masked. The acnode represents an attack action. During searching the subsequent attack action which has the most possibility to happen, the masked attack action is not traversed and searched so as to quickly find the subsequent attack action which has the most possibility to happen.

At block S48, the weighted directed graph of attack actions in which the connection and acnode are masked. In other words, the attack support tree to be obtained is obtained.

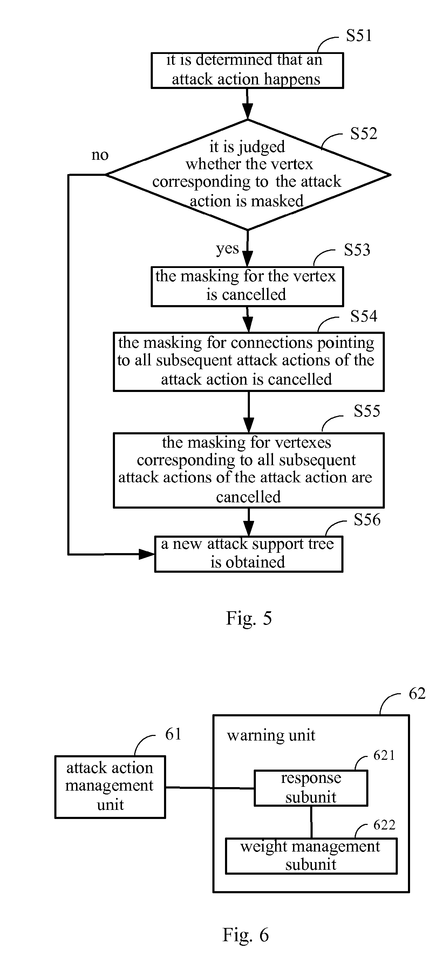

If the vertex corresponding to a determined attack action is masked, the masking for the vertex and connections related to the vertex are cancelled. If an attack sequence corresponding to a masked connection occurs again, the masking for the connection is cancelled. As shown in Figure 5, the process includes the following blocks.

At block S51, it is determined that an attack action happens by monitoring the change of the network status parameter.

At block S52, it is judged whether the attack action is masked. If the attack action is masked, the flow turns to block S53; otherwise, turns to block S56. Judging whether the attack action is masked includes: searching an index table 21, if *active* 212 corresponding to the attack action is configured as *N,* it is indicated that the attack action is masked; if *active* 212 corresponding to the attack action is configured as *Y*, it is indicated that the attack action is not masked.

At block S53, the masking for the vertex is cancelled. In other words, *active* 212 is changed to *Y*.

At block S54, the masking for connections pointing to all subsequent attack actions of the attack action is cancelled, including: searching a subsequent attack action table 22 corresponding to the attack action and changing *active* 223 in the subsequent attack action table 22 to *Y*.

At block S55, the masking for vertexes corresponding to all subsequent attack actions of the attack action are cancelled, including: obtaining names *next_name 221* of all subsequent attack actions of the attack action; searching an index table 21; and changing *active 212* in table items corresponding to the name *next_name 221* to *Y*.

At block S56, a new graph is obtained. In other words, the attack support tree is obtained.

According to the above embodiments, the weighted directed graph of attack actions is simplified to establish the attack support tree. Thus, the mode of current attack can be quickly determined and the response time of the detection can be shortened. Therefore, the efficiency for predicting a network attack action is improved.

Figure 6 shows a structure of a device according to one embodiment of the present invention. The device includes an attack action management unit 61 and a warning unit 62. The warning unit 62 further includes a response subunit 621 and a weight management subunit 622. The attack action management unit 61 is adapted to monitor a network status parameter, determine that an attack action happens when the network status parameter changes, find a subsequent attack action which has the most possibility to happen of the attack action according to the correspondence of the attack action and subsequent attack actions, and control the response subunit 621 to block the subsequent attack action which has the most possibility to happen via the warning unit 62. The response subunit 621 stores a policy for blocking subsequent attack actions so as to block subsequent attack actions. The weight management subunit 622 updates the occurrence number of the attack sequence from the attack action to the subsequent attack action which has the most possibility to happen according to the blocking result of subsequent attack actions. If the response subunit 621 succeeds in blocking subsequent attack actions and the network status is recovered to the safe status, the weight management subunit 622 increases the occurrence number of the attack sequence from the attack action to the subsequent attack action which has the most possibility to happen. If the response subunit 621 fails to block subsequent attack actions and the network status is not recovered to the safe status, the weight management subunit 622 decreases the occurrence number of the attack sequence from the attack action to the subsequent attack action which has the most possibility to happen. Thus, the network attack action can be described and predicted more accurately and timely by updating the occurrence number of the attack sequence from the attack action to the subsequent attack action which has the most possibility to happen.

If the attack action management unit 61 determines that the attack action *A* initiates an attack action and finds *B* is the subsequent attack action which has the most possibility to happen of *A*, the attack action management unit 61 controls the response subunit 621 to block *B*. If the response subunit 621 succeeds in blocking *B*, the network status is recovered to the safe status and the weight management subunit 622 updates *i* with *i*+*1*. If the response subunit 621 fails to block B and the network status is not recovered to the safe status, the weight management subunit 622 updates *i* with *i*-*1*.

If the attack action management unit 61 determines that one of the attack actions *B* and *D* initiates an attack action, the attack action management unit 61 searches a common subsequent attack action which has the most possibility to happen from the subsequent attack actions of *B* and *D*. If the common subsequent attack action which has the most possibility to happen is *F*, the response subunit 621 is controlled to block *F*. If the response subunit 621 succeeds in blocking *F* and the network status is recovered to the safe status, the weight management subunit 622 updates *e* and *g* with *e* + β /*2* and g+ β /*2*. If the response subunit 621 fails to block *F* and the network status is not recovered to the safe status, the weight management subunit 622 updates *e* and *g* with *e* - β /*2* and *g*- β /*2*, in which β ranges from 0 to 1.

In above embodiments of the present invention, the attack action procedure and the relation among attack actions during the attack action procedure are described; the subsequent attack action which has the most possibility to happen is found from all subsequent attack actions of the happened attack action according to the correspondence between the attack action and the subsequent attack actions of the attack action; and the corresponding response subunit blocks the subsequent attack action which has the most possibility to happen. Thus, the subsequent attack actions can be predicted and blocked, the pre-warning for the subsequent attack actions is achieved and the safety of the network is improved.

According to the above embodiments, those skilled in the art can appreciate that the present invention can be implemented with a combination of software and necessary universal hardware platform, or be implemented with hardware. However, in most cases, the combination of software and necessary universal hardware platform is preferable. Thus, the technical solution of the present invention, in particularly, the portion of the technical solution which contributes to the prior art, may be implemented in the form of software product. The computer software product may be stored in a storage media including a number of instructions adapted to cause a computer device (including a Personal Computer, a server and a network device) to implement the method according to one embodiment of the present invention.

The above is merely exemplary embodiments of the present invention. It shall be noted that those skilled in the art can make further modifications and improvements without departing from the concept of the present invention and the modifications and improvements are also within the protection scope of the present invention.

## Claims

1. A method for predicting a network attack action, comprising:
monitoring a network status parameter and obtaining information of an attack action according to a change of the network status parameter;
selecting a subsequent attack action which has a most possibility to happen from subsequent attack actions of the attack action according to a correspondence between the attack action and the subsequent attack actions, the subsequent attack action which has the most possibility to happen being a subsequent attack action with a largest occurrence number in the subsequent attack actions corresponding to the attack action; and
outputting the subsequent attack action which has the most possibility to happen as a predicted network attack action.

2. The method according claim 1, further comprising, if the attack action is a single attack action, searching the subsequent attack action which has the most possibility to happen from all subsequent attack actions of the attack action.

3. The method according to claim 1, further comprising, if the attack action comprises a plurality of possible attack actions, searching a common subsequent attack action which has the most possibility to happen from the possible attack actions.

4. The method according to claim 1, after outputting the subsequent attack action which has the most possibility to happen as the predicted network attack action, further comprising,
blocking the subsequent attack action which has the most possibility to happen;
if the process of blocking the subsequent attack action which has the most possibility to happen is successful, increasing the occurrence number of an attack sequence from the attack action to the subsequent attack action which has the most possibility to happen;
if the process of blocking the subsequent attack action which has the most possibility to happen is failed, decreasing the occurrence number of the attack sequence from the attack action to the subsequent attack action which has the most possibility to happen.

5. The method according to claim 4, wherein, increasing or decreasing the occurrence number of the attack sequence from the attack action to the subsequent attack action which has the most possibility to happen comprises:
if the attack action is a single attack action which is uniquely determined, increasing or decreasing the occurrence number of the attack sequence from the attack action to the subsequent attack action which has the most possibility to happen by 1;
if the attack action is one of a plurality of possible attack actions, increasing or decreasing a possibility coefficient of the attack sequence from the attack action to the subsequent attack action which has the most possibility to happen by β /k, β ranging from 0 to 1 and k being the number of the possible attack actions.

6. The method according to claim 1, before monitoring the network status parameter, further comprising,
establishing a correspondence among a name of the attack action, a state of the attack action and a subsequent attack action of the attack action; and
establishing a correspondence among a name of the subsequent attack action, a state of the subsequent attack action, an occurrence number of an attack sequence from the attack action to the subsequent attack action and a policy for blocking the subsequent attack action which has the most possibility to happen.

7. The method according to claim 6, after establishing the correspondence, further comprising,
judging whether the occurrence number of the attack sequence from the attack action to the subsequent attack action is less than a weight threshold;
if the occurrence number of the attack sequence from the attack action to the subsequent attack action is less than the weight threshold, masking the subsequent attack action and a connection from the attack action to the subsequent attack action.

8. The method according to claim 7, comprising, if a previous attack action of a masked subsequent attack action happens, canceling a masking for the masked subsequent attack action and canceling a masking for the connection from the previous attack action to all subsequent attack action of the previous attack action.

9. A device for predicting a network attack action, comprising: an attack action management unit adapted to detect a change of a network status parameter, search attack action information according to the change of the network status parameter, and predict a subsequent attack action which has a most possibility to happen from subsequent attack actions corresponding to an attack action, according to a correspondence between the attack action and the subsequent attack actions of the attack action.

10. The device according to claim 9, further comprising,
a warning unit, adapted to block the subsequent attack action which has the most possibility to happen predicted by the attack action management unit and update an occurrence number of an attack sequence from the attack action to the subsequent attack action which has the most possibility to happen.

11. The device according to claim 9, wherein, the warning unit comprises:
a response subunit, adapted to block the subsequent attack action; and
a weight management subunit, adapted to update the occurrence number of the attack sequence from the attack action to the subsequent attack action which has the most possibility to happen.

12. The device according to claim 11, wherein, the weight management subunit updates the occurrence number of the attack sequence from the attack action to the subsequent attack action which has the most possibility to happen,
if the response unit successfully blocks the subsequent attack action which has the most possibility to happen, the weight management subunit increases the occurrence number of the attack sequence from the attack action to the subsequent attack action which has the most possibility to happen;
if the response unit fails to block the subsequent attack action which has the most possibility to happen, the weight management subunit decreases the occurrence number of the attack sequence from the attack action to the subsequent attack action which has the most possibility to happen.
